# EUROPEAN PATENT APPLICATION

(11) **EP 3 179 758 A1**
(43) Date of publication of application: **14.06.2017**
(21) Application number: 16192620.9
(22) Date of filing: 06.10.2016
(51) Int. Cl.: H04W 12/08, H04W 4/00, H04M 11/02, H04M 1/02, H04L 29/06

(54) **BUILDING INTERCOM METHOD, NFC UNLOCKING DEVICE AND BUILDING INTERCOM SYSTEM**

(30) Priority: 08.12.2015 CN 201510896783
(71) Applicant: ABB Schweiz AG, 5400 Baden (CH)
(72) Inventor: Fu, Wei, Xiamen, Fujian 361006 (CN); Zhang, Zhuyue, Xiamen, Fujian 361006 (CN)
(74) Representative: Zimmermann & Partner Patentanwälte mbB

(57) **Abstract**

The present invention discloses a building intercom method, NFC unlocking device and building intercom system providing call and intercom service for a visitor's mobile terminal with a NFC function. According to the building intercom method of the present invention, a mobile terminal is wirelessly connected to an unlocking device via a wireless electric field; the mobile terminal calls a remote device of a resident via a call and intercom client terminal, and the mobile terminal collects a signal at visitor side and sends the collected signal to the remote device of the resident; the resident makes an answer via the remote device, then a call and intercom connection with the resident is built, such that the resident communicates with the visitor to verify whether the visitor is legal; if the resident verifies that the visitor is legal, the resident sends an unlocking signaling to the mobile terminal of the visitor; the unlocking signaling is forwarded to the unlocking device via the wireless electric field by the mobile terminal; the unlocking device authenticates the validity of the unlocking signaling after receiving the unlocking signaling; if it is legal and valid, the unlocking device controls the electronic control lock to perform an unlocking operation, so as to achieve the entrance access function that lets the legal visitor in.

## Description

### TECHNICAL FIELD

The present invention relates to a building intercom method of providing intercom service for a visitor's mobile terminal with NFC function, meanwhile, the present invention also relates to a NFC unlocking device, and a building intercom system.

### BACKGROUND

A building intercom system is a management system in multi-story or high-rise buildings, which is used to achieve call and information exchange between visitors, residents, and property management centers, and to achieve controlling of safe access in a community. A core function of the building intercom system is to remotely control an entrance access to allow a valid visitor to enter a building, after a communication with the visitor via an audio and/or video connection. Therefore, convenience and security of the control of an entrance access is a very important performance index of the building intercom system.

A traditional analog intercom system is constructed as a relatively closed network system via a customized bus, and thus cannot be interconnected with the Internet. A traditional building intercom system has to connect devices, such as a host, an extension, etc., via cables to build up a system, which can be connected to the Internet via a gateway or a router. This system requires a complicate system wiring. Audio and/or video information of visitors needs to be sampled, coded, and transferred by the host, and finally sent to a client terminal, so as to establish an audio and/or video call between these two parties, which causes the host to have an expensive price and a complex function. Moreover, generally the user interface on the host is relatively simple, and has relatively limited usability. If user experience is enhanced by adding display interfaces, the cost is further dramatically increased. With development of technique, digital building intercom systems based on local area network and designed by adopting TCP/IP protocol are growing up, and connecting, accessing and controlling the building intercom system via the Internet has come true.

On the other hand, smartphones play an increasingly important role in our lives. In addition to being connected to the network via Wi-Fi, a smartphone can also be connected to the Internet via a mobile network. By means of such flexible wireless connection, people can transfer large quantity of data and control devices remotely anytime and anywhere, making our lives become greatly convenient.

Currently, as NFC (Near Field Communication) becomes popular, more and more mobile terminals, such as smartphone, are equipped with a NFC communication function. NFC is developed by integrating non-contact radio frequency identification (RFID) and interconnection technique. It integrates an induction card reader, an induction card and a "point to point" function on a single chip, and can indentify compatible devices and exchange data with the compatible devices within a short distance. The most primary work pattern of NFC is to achieve functions such as payment, data transfer, etc., by reading data content of a tag of other devices which conforms to NFC specification. By means of this technique, electronic devices can identify each other and exchange data with each other by approaching or touching within a short distance less than 10cm or so.

In recent years, an unlocking method based on a RFID card (IC, ID card) starts to emerge, which requires residents themselves to carry an unlocking device with a single unlocking function. However, this method requires carrying the unlocking device with extremely limited functions, and thus once the unlocking device is lost or left at home, the door cannot be opened. Moreover, if the user needs to open the lock and a technician who knows an unlocking way is absent, the lock cannot be opened, making our lives inconvenient.

As the usage of smartphones becomes popular, unlocking techniques using a smartphone as a medium have emerged currently; for example, an unlocking technique wherein NFC function of a smartphone performs message interaction with a door lock to send unlocking commands, and an unlocking technique wherein a smartphone sends a remote unlocking command in form of text message via a mobile network to unlock the door. However, such techniques have the following disadvantages.

Firstly, unlocking techniques based on NFC smartphone involve interaction of some simple unlocking signalings, and an unlocking password is transferred in plain text, which can be easily monitored and intercepted via internet, and thus has a low security.

Secondly, a corresponding relationship between a lock using an NFC unlocking device and a resident is not built up. An owner of an NFC smartphone cannot establish an audio/video call connection with the resident via wireless network, such that the user cannot check his or her identity, making it hard to ensure security if the visitor is allowed to enter a building via a remote unlocking.

Thirdly, it is not possible to check, verify, and record the identity of the owner of the smartphone.

To sum up, existing smartphone NFC unlocking methods merely have a single and simple door lock control function, and cannot establish an audio/video connection with the corresponding resident of the lock, and thus is only suitable for entrance access control of the resident, not for the control of the visitor.

Therefore, it has become a research subject in the prior art how to utilize a NFC function of a smartphone to provide a convenient and fast building intercom service for a visitor.

### SUMMARY

To overcome the above disadvantages in the prior art, the object of the present invention is to provide a call and intercom service for a visitor's mobile terminal with a NFC function.

The problems in the prior art are at least partly overcome by the building intercom method, the NFC unlocking device, and a building intercom system according to the independent claims. Further embodiments, details, and advantages are evident from the dependent claims, the description, and the accompanying drawings.

A technical solution of the present invention provides a building intercom method, comprising: a mobile terminal is wirelessly connected to a NFC unlocking device via a wireless electric field; the mobile terminal calls a remote device of a resident via a call and intercom client terminal, and the mobile terminal collects signals at the visitor's side and sends the collected signals to the remote device of the resident; the resident makes an answer via the remote device, and thus builds up a call and intercom connection with the resident, such that the resident communicates with the visitor to verify whether the visitor is valid; if the resident verifies that the visitor is valid, the resident sends an unlocking signaling to the mobile terminal of the visitor; the unlocking signaling is transferred to the NFC unlocking device via the wireless electric field by the mobile terminal; the NFC unlocking device authenticates a validity of the unlocking signaling after receiving the unlocking signaling, if it is valid, the NFC unlocking device controls the electronic control lock to perform unlocking operation, so as to achieve the entrance access function that lets a valid visitor in.

Further, if the call and intercom client terminal is not installed on the mobile terminal, the mobile terminal downloads the call and intercom client terminal from a network through the information provided by the NFC unlocking device; if the call and intercom client terminal has been installed on the mobile terminal, downloading is not needed.

Further, the information provided by the NFC unlocking device comprises an address of a web server and a serial number of the NFC unlocking device, wherein the web server is used for storing a resident list and the web-based call and intercom client terminal.

Further, if the NFC unlocking device corresponds to a plurality of residents, the call and intercom client terminal provides the resident list corresponding to the NFC unlocking device to the visitor, so as to allow the visitor to select resident to be called; if the NFC unlocking device corresponds to only one resident, the visitor can directly initiate a call request to the resident via the call and intercom client terminal.

Further, the resident list is a picture and/or character and/or video list with hypertext link.

Further, the list is displayed in a webpage form on a browser of the mobile terminal.

Further, the hypertext link is used to execute script routine, then launch an installed application to initiate a call to a dedicated resident.

Further, the hypertext link is a uniform resource locator (URL) of a specified protocol, which supports the call request to be directly initiated to the dedicated resident.

Further, the client terminal is a web-based sip terminal, used for sending, receiving and analyzing a sip signaling via websocket, and maintaining a call and intercom state machine; the mobile terminal can make a registration, initiate a call, and maintain an intercom state according to sip protocol, to achieve a call and intercom connection with the remote device of the resident; the remote device of the resident is the sip terminal which can be interconnected with a sip server, such that the resident can perform an off-hook operation in response to the call from the mobile terminal of the visitor, to establish the call and intercom connection.

Further, the call and intercom connection is an audio and/or video connection.

Further, the information provided by the NFC unlocking device comprises unlocking random numbers generated dynamically, wherein the mobile terminal, when calling the resident, sends the unlocking random numbers, as information carried by the call command, to the remote device of the resident.

Further, the unlocking signaling sent by the resident after verifying that the visitor is valid comprises a ciphertext obtained by performing an encrypting operation to encrypt the unlocking random numbers sent by the visitor and combining the unlocking password of the NFC unlocking device by means of an encryption algorithm; an unlocking certification step is further performed before unlocking, wherein the unlocking certification step comprises: when the unlocking signaling transferred by the visitor is received, the NFC unlocking device compares the unlocking signaling to the ciphertext generated by encrypting the unlocking random numbers and the unlocking password of the NFC unlocking device, if they are identical, the visitor passes the certification.

Further, the mobile terminal is a laptop, a smartphone, or a tablet computer.

Further, the mobile terminal of the resident is a laptop, a smartphone, or a tablet computer.

Further, the NFC unlocking device can perform the unlocking operation in response to the unlocking command of the resident, when the remote device of the resident is in wireless connection with the NFC unlocking device via the wireless electric field.

Another technical solution of the invention also provides a NFC unlocking device providing building call and intercom service for a visitor's mobile terminal with a NFC function, wherein, the NFC unlocking device comprises: a communication unit, a storage unit, and an unlocking executing unit, wherein, the communication unit is configured to be in wireless connection with the visitor's mobile terminal via a wireless electric field, to achieve protocol forwarding and command interacting; the storage unit is used for storing unlocking certification data and one or more pieces of resident information corresponding to the unlocking device; and the unlocking executing unit is configured to control an electronic control lock to perform an unlocking operation, so as to achieve an entrance access function that lets a valid visitor in.

Further, the information stored in the storage unit comprises an address of a web server and a serial number of the NFC unlocking device.

Further, the unlocking certification data comprise an unlocking password of the NFC unlocking device and unlocking random numbers generated dynamically; the NFC unlocking device also comprises an unlocking certification unit, used for comparing an unlocking signaling received by the visitor's mobile terminal from a remote device of the resident with a ciphertext generated by encrypting the unlocking random numbers and the unlocking password of the NFC unlocking device.

Further, the unlocking executing unit is further configured to perform the unlocking operation in response to an unlocking command of the resident, when the remote device of the resident is in wireless connection with the NFC unlocking device via the wireless electric field.

Further, the mobile terminal is a laptop, a smartphone, or a tablet computer.

Another technical solution of the invention provides a building intercom system providing building call and intercom service for a visitor's mobile terminal with a NFC function, comprising a remote device of a resident, a web server arranged in a network, a call and intercom server arranged in the network, and the NFC unlocking device as described above, wherein, the web server is used for storing a resident list and a web-based call and intercom client terminal; the remote device of the resident is a device supporting a call and intercom protocol, used for conducting a call and intercom connection with the mobile terminal, and sending an unlocking signaling when it is verified that the visitor is valid; the call and intercom server is used for achieving management and control of the call.

Further, the call and intercom server is a sip server; the client terminal is a web-based sip terminal, used for sending, receiving and analyzing the sip signaling via websocket, and maintaining a call and intercom state machine.

Further, the remote device of the resident is a laptop, a smartphone, or a tablet computer.

Further, the call and intercom connection is an audio and/or video connection.

Further, the network is a wide area network or a local area network consisting of a mobile network or wired network.

Therefore, the present invention can provide a completely new networked, visible, wireless building intercom service for a visitor's mobile terminal with a NFC function. The building intercom method, the NFC unlocking device and the building intercom system of the present invention overcome the disadvantages in the prior art, so as to achieve an easy installation, a low cost, and the following advantages:
1. A wireless, networked, visible or invisible building intercom system is constituted by the NFC unlocking device, visitor smartphone, resident device of a user, which can be remotely connected to the resident device of the user via a wireless interface of the visitor smartphone, without any need of a complex system constructed by wirings;
2. The NFC unlocking device only needs an electronic control lock control and a NFC communication function, without any need of complex and expensive audio and video collecting, coding, and transmitting function, with low cost and easy installation;
3. The NFC unlocking device is simulated as a NFC tag, being operated in a card simulation mode defined by NFC protocol to communicate with the smartphone, with a good compatibility with the smartphone, to overcome the problem of the conflict between RF fields of both parties, so as to achieve a high reliability;
4. By receiving and sending URI type of NDEF data and adopting web-based sip terminal, any visitor smartphone with a NFC function can initiate an audio and video call request to the resident device of the user;
5. The resident device of the user can be any device supporting sip protocol, can be a smart phone, and can also be an extension device of the building intercom;
6. The visitor's smartphone can automatically download, from the web server terminal, a sip terminal and a user list, which are displayed on a browser in a webpage form, wherein the webpage can be freely edited by the user, and thus has several forms, substantial contents, and good usability, so that the user experience performance is greatly improved, meanwhile advertising promotion can be achieved via the webpage.
7. The security level is high: the unlocking signaling is transferred via cyphertext of rolling code, so that the possibility to monitor and intercept the unlocking password is substantially zero.

The further description of the present invention is provided below in connection with the drawings and embodiments.

### BRIEF DESCRIPTION OF THE DRAWINGS

To better describe the embodiments of the present invention, the following drawings are provided. It should be appreciated, the drawings show preferable embodiments of the present invention as examples, and should not be interpreted as a limitation to the present invention. Wherein,
Figure 1 is a block diagram of a building intercom system of one embodiment provided by the present invention;
Figure 2 is a flow chart of a visitor smartphone reading a user list and downloading a sip terminal from a server according to one embodiment provided by the present invention;
Figure 3 is a diagram of a user list of one embodiment provided by the present invention;
Figure 4 is a flow chart of the building intercom method of one embodiment provided by the present invention.

### DETAILED DESCRIPTION OF THE EMBODIMENTS

A detailed description of the present invention is provided below in connection with the drawings and embodiments. It should be understood, terms, such as "left", "right", "up", "down", "front", and "back", in the description hereinafter are merely used for expressing the direction indicated with reference to the drawings; and terms, such as "first", "second", and "third" are used for illustrating a number of components, however, these components are not ranked, but only for distinguishing one component from another.

The present disclosure discloses a building intercom method and system based on a NFC smartphone, by which, a visitor can call a resident device via a NFC smartphone, and establish an audio/video connection with the resident device, achieving calling and intercom; and the resident device can unlock a lock via the NFC smartphone to let the visitor in, achieving an entrance access function.

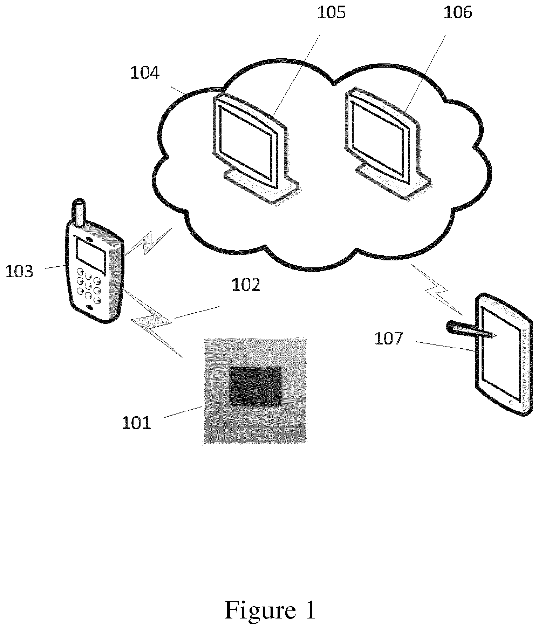

With reference to the block diagram of a building intercom system in Figure 1, the building intercom system comprises a NFC unlocking device 101, a wireless electric field 102, a visitor's mobile terminal 103, a network 104, a web server 105, a call and intercom server 106, and a resident's remote device 107.

The wireless electric field 102 is used for a wireless communication between the NFC smartphone and the NFC unlocking device.

The visitor's mobile terminal 103 can be a laptop, a smartphone, or a tablet computer.

The network 104 is a wide area network or a local area network consisting of a mobile network or wired network.

The web server 105 is a web server deployed on a wide area network or a local area network, and is used for storing a resident list and a web-based call and intercom client terminal.

The call and intercom server 106 is a server deployed on a wide area network or a local area network, for achieving the management and control of a call.

The resident's remote device 107 is a device supporting a call and intercom protocol, for establishing an audio/video intercom connection with the mobile terminal 103, and sending an unlocking signaling when the it is verified that the visitor is valid. The remote device 107 can be a laptop, a smartphone, or a tablet computer.

The NFC unlocking device 101 further comprises a communication unit in charge of establishing a wireless connection with the visitor's mobile terminal 103 to achieve protocol forwarding and command interacting, a storage unit storing unlocking certification data and one or more pieces of resident information corresponding to the unlocking device 101, such as an address of a web server and a serial number of the NFC unlocking device, and an unlocking executing unit for controlling an electronic control lock to perform an unlocking operation by outputting a switch signal, so as to achieve an entrance access function that lets a valid visitor in.

Therefore, in the present disclosure, a NFC unlocking device, a visitor smartphone, a user's resident device are constructed into a wireless, networked, visible or invisible building intercom system, which is remotely connected with the user's resident device via a wireless interface of the visitor smartphone. Thus, a basic function of a traditional building intercom system can be achieved without a complex system constructed by wiring, which dramatically improves convenience of the control of the entrance access. The NFC unlocking device 101 of the present disclosure only needs to possess the electronic control lock control and NFC communication functions, without any complex and expensive audio/video collecting, coding, and transmitting functions, so that the cost becomes low and the installation is very easy.

In order to further improve the security of the entrance access control, in one preferable embodiment, the storage unit can store unlocking certification data comprising an unlocking password of the NFC unlocking device and unlocking random numbers generated dynamically. The information provided for a visitor by the NFC unlocking device also comprises the unlocking random numbers generated dynamically. The visitor, when calling the resident, sends the unlocking random numbers, as the information carried by a call command, to the resident. The NFC unlocking device 101 can also comprise an unlocking certification unit, used for, when the unlocking signaling is received from the visitor's mobile terminal 103, comparing the received unlocking signaling to a ciphertext generated by encrypting the unlocking random numbers and the unlocking password of the NFC unlocking device. The possibility that the unlocking password is monitored and intercepted via the internet is substantially zero, since the unlocking signaling is transferred via the ciphertext of rolling code.

Besides providing an audio/video intercom function for the resident and the visitor, the building intercom system of the present disclosure also provides a NFC unlocking function for the resident, that is, the unlocking executing unit is configured to perform an unlocking operation directly in response to the unlocking command from the resident, when the remote device (such as a smartphone) of the resident is in wireless connection with the NFC unlocking device 101 via the wireless electric field 102.

Preferably, the call and intercom server 106 can be a sip server, and the client terminal can be a web-based sip terminal, which can send, receive, and analyze a sip signaling via websocket, and maintain a call and intercom state machine. Therefore, the resident device of the user can be any device supporting sip protocol, can be a smartphone, and can be a building intercom extension device; and can make a registration, initiate a call, and maintain the call and intercom state according to the sip protocol.

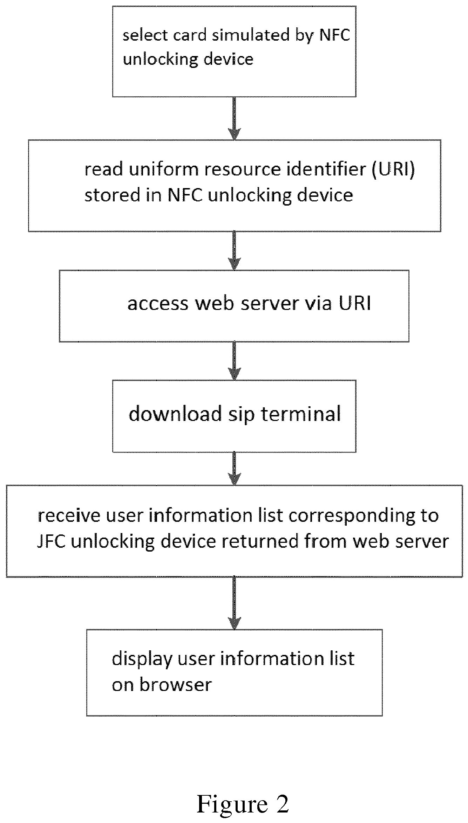

Figure 2 is a flow chart for showing that a visitor smartphone reads a user list and downloads a sip terminal from a server. The NFC unlocking device is simulated as a NFC tag, is operated in a card simulation mode defined by the NFC protocol to communicate with the visitor smartphone. The information provided for the visitor by the NFC unlocking device 101 comprises a web address of the web server and the serial number of the NFC unlocking device. The visitor accesses the web server by the web address provided by the above mentioned information, such that the visitor smartphone can automatically download the sip terminal from the web server terminal. Therefore, the visitor can receive and send the URI type of NDEF data and adopt the web-based sip terminal, and thus any smartphone with the NFC function can initiate an audio/video call request to the resident device of the user.

If the call and intercom client terminal is not installed on the visitor smartphone, the call and intercom client terminal can be downloaded via the network in the ways described above. If the call and intercom client terminal has been installed on the visitor smartphone, downloading is not needed.

If the NFC unlocking device 101 corresponds to a plurality of residents, the web server provides a resident list corresponding to the NFC unlocking device 101 to the visitor according to the serial number of the NFC unlocking device, so that the visitor can select one resident to be called; if the NFC unlocking device 101 corresponds to only one resident, the visitor can directly initiate the call request to the resident via the client terminal. The resident list is a picture and/or character and/or video list with a hypertext link. The hypertext link can execute a passage of script function, used for being connected with other instant call software, and initiating a call request to the dedicated resident; and also can be a uniform resource locator (URL) of the dedicated protocol, which supports directly initiating the call request to the dedicated resident.

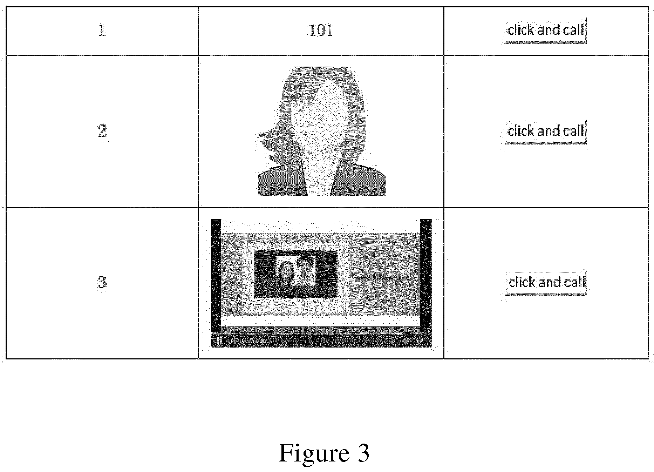

As shown in Figure 3, the user list can be displayed on the browser of the visitor smartphone in a form of webpage, which can be voluntarily edited by the user, and has a wide variety of forms and contents, and a good usability. Therefore, the user experience performance is greatly improved, meanwhile advertising promotions can be performed via the webpage.

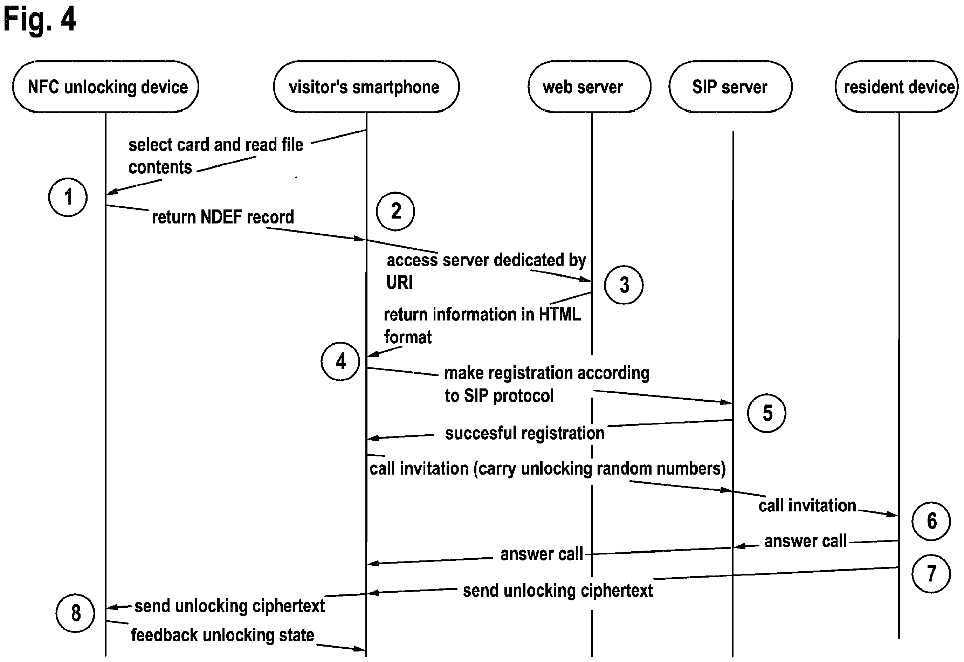

Now please refer to Figure 4, which shows the building intercom service providing the audio/video connection with the resident for the visitor smartphone with NFC function.

To better set forth the embodiment of the present disclosure, the specific steps of the visitor smartphone achieving the intercom with the resident are listed in detail below. It should be noted that the embodiment should not be interpreted as a limitation to the present invention.
1. Firstly, the resident list corresponding to the unlocking device 101 is pre-edited in a html format, then stored in the web server; the sip server, account number and password are dedicated for the resident list and together stored in the web server, and all the resident devices enroll and register on the sip server; the unlocking device 101 is configured to store the address of the web server into a nonvolatile memory thereof.
2. The NFC unlocking device is set to be operated in a card simulation mode, that is, is simulated as a piece of NFC tag. When the victor makes his/her smartphone approach the NFC unlocking device, the visitor's smartphone detects the NFC unlocking device, and selects and activates the tag, then the visitor's smartphone reads files in the NFC unlocking device according to iso 14443-4 protocol, and the NFC unlocking device generates a uniform resource identifier (URI) as NDEF file content returning to the visitor's smartphone according to its serial number, the stored web server address and the unlocking random numbers generated dynamically; its identifier points to the web server, meanwhile, the identifier carries the serial number that can identify the NFC unlocking device and the unlocking random numbers generated dynamically, for example:
   http://www.genway.com/intercomm/getuserlist.php?deviceid=123456&randomnum=34fece,
   wherein the parameter "deviceid" represents the identifier of the NFC unlocking device, and the parameter "randomnum" represents the unlocking random numbers generated dynamically.
3. The visitor's smartphone will automatically start up the browser, and send an accessing request to the web server dedicated by the identifier after reading uri type of NDEF file record;
4. After receiving the request, the web server searches out the user list information corresponding to the unlocking device from the data stored in the web server, according to the identifier of the NFC unlocking device carried on the request, and returns the user list information to the visitor smartphone in html format, such that the user list information is finally presented in the browser of the visitor's smartphone in web format;
5. Each user information comprises display contents (e.g. character, picture, or video) on the browser, the display pattern, etc, meanwhile, it also comprises a universal resource identifier adaptive to call the resident device, which points to the sip server, and carries the information necessary to initiate the sip call, such as, the sip account number of the party who initiates the call and password thereof, as well as the sip account number of the user.
6. As shown in Figure 3, the call list is a picture, character or video list with hypertext link, the display content of which can be a picture, character or animation, and the form of which can be voluntarily set by the user, with the purpose of facilitating the visitor to indentify the resident information of each resident, to initiate the call, and meanwhile to improve the user experience such as usability.
7. The information returned to the visitor smartphone from the web server also comprises the sip terminal achieved based on the web. The sip terminal is a web application running on the browser, which is complied with JavaScript scripting language, with a core portion being a sip, sdp protocol stack. This stack is used for sending, receiving, and analyzing the sip signaling via websocket, and maintain the call and intercom state machine.
8. The hypertext link of the call list can execute a passage of script function, which is used for being linked with other instant call software (e.g. WeChat, and QQ), etc, pointing to the instant call software, and initiating the call application to the dedicated account number.
9. The hypertext link of the call list can also be a uniform resource locator (URL) of a dedicated protocol, which directly points to the dedicated user to initiate the call application based on sip.
10. If the NFC unlocking device only corresponds to a single user, the javasclipt script of the webpage initiates the sip call application via the script automatically according to the above mentioned user uri accessing the sip server.
11. The web client terminal sends the call request to the sip server via the script procedure, by the automatic operation of the script, or after the visitor clicks.
12. The resident device is a sip terminal which can be interconnected with the sip server. An audio/video call connection is established according to the sip protocol, after an off-hook operation is performed by the user in response to the call from the visitor's smartphone.
13. In the sent sip call request signaling, the visitor smartphone sends the received unlocking random numbers as the content carried by the sip signaling to the resident device.
14. The remote user makes a selection whether to unlock the lock for the visitor according to a call result. If unlocking is needed, the unlocking ciphertext is sent to the visitor's smartphone via the resident device, which is obtained by encrypting the received unlocking random numbers and the unlocking password stored in the NFC unlocking device when registering according to an encryption algorithm.
15. A prompt box pops up after the visitor's smartphone receives the unlocking ciphertext, to remind the visitor to make the cellpphone approach the NFC unlocking device again, so as to perform the unlocking operation.
16. The unlocking device, after receiving the ciphertext, encrypts the random numbers sent previouly and the password stored in the device to generate the ciphertext, and compares the generated ciphertext to the received ciphertext; if they are identical, an electronic control lock is output to perform unlocking operation.

Those skilled in the art also can adjust, add or delete specific step(s) of the above mentioned building intercom method.

Thus, according to the method disclosed by the disclosure, the visitor can call the resident device via the NFC smartphone, and establishes an audio/ video connection with the resident device, achieving call and intercom; and the resident device can unlock the lock via the NFC smartphone, to let the visitor in, achieving the entrance access function.

The above mentioned technical solutions can be combined as required, so as to achieve the best technical effect.

The contents described above merely are the principle and preferable embodiments of the present disclosure. It should be noted that, although the preferred embodiments and drawings of the present disclosure are disclosed for the purpose of illustrating the present invention, those skilled in the art can make variety of replacements, modifications and polishes, within the spirit and scope of the present disclosure and accompanied claims. Thus, a number of variations can be made based on the principle of the disclosure, and thus should be considered to fall into the protection scope of the present disclosure.

## Claims

1. A building intercom method providing call and intercom service for a visitor mobile terminal with NFC function, **characterized in that**, the building intercom method comprises:
the mobile terminal (103) is wirelessly connected to a NFC unlocking device (101) via a wireless electric field (102);
the mobile terminal (103) calls a remote device (107) of a resident via a call and intercom client terminal, and the mobile terminal (103) collects signals at the visitor's side and sends the collected signals to the remote device of the resident;
the resident makes an answer via the remote device, and thus builds up a call and intercom connection with the resident, such that the resident communicates with the visitor to verify whether the visitor is valid;
if the resident verifies that the visitor is valid, the resident sends an unlocking signaling to the mobile terminal (103) of the visitor;
the unlocking signaling is transferred to the NFC unlocking device (101) via the wireless electric field (102) by the mobile terminal;
the NFC unlocking device (101) authenticates the validity of the unlocking signaling after receiving the unlocking signaling, if it is valid, the NFC unlocking device controls an electronic control lock to perform unlocking operation, so as to achieve the entrance access function that lets a valid visitor in.

2. The building intercom method according to claim 1, **characterized in that**, if the call and intercom client terminal is not installed on the mobile terminal (103), the mobile terminal (103) downloads the call and intercom client terminal from a network (104) through the information provided by the NFC unlocking device (101);
if the call and intercom client terminal has been installed on the mobile terminal (103), downloading is not needed,
wherein preferably the information provided by the NFC unlocking device (101) comprises an address of a web server and a serial number of the NFC unlocking device, wherein the web server is used for storing a resident list and the web-based call and intercom client terminal.

3. The building intercom method according to any of claims 1 or 2, **characterized in that**, if the NFC unlocking device (101) corresponds to a plurality of residents, the call and intercom client terminal provides the resident list corresponding to the NFC unlocking device (101) to the visitor, so as to allow the visitor to select resident to be called;
if the NFC unlocking device (101) corresponds to only one resident, the visitor can directly initiate a call request to the resident via the call and intercom client terminal,
wherein the resident list is typically a picture and/or character and/or video list with hypertext link, wherein preferably:
- the list is displayed in a webpage form on a browser of the mobile terminal (103); and/or
- the hypertext link is used to execute script routine, then launch an installed application to initiate a call to a dedicated resident; and/or
- the hypertext link is a uniform resource locator (URL) of a dedicated protocol, which supports the call request to be directly initiated to the dedicated resident.

4. The building intercom method according to any one of claims 1-3, **characterized in that**, the client terminal is a web-based sip terminal, used for sending, receiving and analyzing a sip signaling via websocket, and maintaining a call and intercom state machine;
the mobile terminal (103) can make a registration, initiate a call, and maintain an intercom state according to a sip protocol, to achieve a call and intercom connection with the remote device (107) of the resident;
the remote device (107) of the resident is the sip terminal which can be interconnected with a sip server (106), such that the resident can perform an off-hook operation in response to the call from the mobile terminal (103) of the visitor, to establish the call and intercom connection.

5. The building intercom method according to any one of claims 1-4, **characterized in that** the call and intercom connection is an audio and/or video connection.

6. The building intercom method according to any one of claims 1-5, **characterized in that**, the information provided by the NFC unlocking device (101) comprises unlocking random numbers generated dynamically, wherein the mobile terminal (103), when calling the resident, sends the unlocking random numbers, as information carried by the call command, to the remote device (107) of the resident,
wherein preferably
the unlocking signaling sent by the resident after verifying that the visitor is valid comprises a ciphertext obtained by performing an encrypting operation to encrypt the unlocking random numbers sent by the visitor and combining the unlocking password of the NFC unlocking device (101) by means of an encryption algorithm;
an unlocking certification step is further performed before unlocking, wherein the unlocking certification step comprises: when the unlocking signaling transferred by the visitor is received, the NFC unlocking device (101) compares the unlocking signaling to the ciphertext generated by encrypting the unlocking random numbers and the unlocking password of the NFC unlocking device (101), if they are identical, the visitor passes the certification.

7. The building intercom method according to any one of the previous claims, **characterized in that** the mobile terminal (103) is a laptop, a smartphone, or a tablet computer; and/or the mobile terminal (107) of the resident is a laptop, a smartphone, a tablet computer, or an indoor station of building intercom system.

8. The building intercom method according to any one of the previous claims, **characterized in that** the NFC unlocking device (101) can perform the unlocking operation in response to the unlocking command of the resident, when the remote device (107) of the resident is in wireless connection with the NFC unlocking device (101) via the wireless electric field (102).

9. A NFC unlocking device providing building call and intercom service for a visitor's mobile terminal with a NFC function, **characterized in that**, the NFC unlocking device (101) comprises: a communication unit, a storage unit, and an unlocking executing unit, wherein,
the communication unit is configured to be in wireless connection with the visitor's mobile terminal (103) via a wireless electric field (102), to achieve protocol forwarding and command interacting, wherein the mobile terminal (103) is preferably a laptop, a smartphone, or a tablet computer;
the storage unit is used for storing unlocking certification data and one or more pieces of resident information corresponding to the unlocking device; and
the unlocking executing unit is configured to control an electronic control lock to perform an unlocking operation, so as to achieve an entrance access function that allows a valid visitor in.

10. The NFC unlocking device according to claim 9, **characterized in that**, the information stored in the storage unit comprises an address of a web server and a serial number of the NFC unlocking device.

11. The NFC unlocking device according to any one of claims 9-10, **characterized in that** the unlocking certification data comprise an unlocking password of the NFC unlocking device (101) and an unlocking random numbers generated dynamically;
the NFC unlocking device (101) also comprises an unlocking certification unit, used for comparing an unlocking signaling received by the visitor's mobile terminal (103) from a remote device (107) of the resident with a ciphertext generated by encrypting the unlocking random numbers and the unlocking password of the NFC unlocking device (101).

12. The NFC unlocking device according to any one of the claims 9-11, **characterized in that** the unlocking executing unit is further configured to perform the unlocking operation in response to an unlocking command of the resident, when the remote device (107) of the resident is in wireless connection with the NFC unlocking device (101) via the wireless electric field (102).

13. A building intercom system providing building call and intercom service for a visitor's mobile terminal with a NFC function, **characterized in that** the building intercom system comprises a remote device (107) of a resident, a web server (105) arranged in a network (104), a call and intercom server (106) arranged in the network (104), and the NFC unlocking device (101) according to any one of claims 9-12, wherein,
the web server (105) is used for storing a resident list and a web-based call and intercom client terminal;
the remote deivce (107) of the resident is a device supporting a call and intercom protocol, used for conducting a call and intercom connection with the mobile terminal (103), and sending an unlocking signaling when it is verified that the visitor is legal;
the call and intercom server (106) is used for achieving management and control of the call.

14. The building intercom system according to claim 13, **characterized in that** the call and intercom server (106) is a sip server (106);
the client terminal is a web-based sip terminal, used for sending, receiving and analyzing the sip signaling via websocket, and maintaining a call and intercom state machine.

15. The building intercom system according to claim 13 or 14, **characterized in that** the remote device (107) of the resident is a laptop, a smartphone, or a tablet computer; and/or the call and intercom connection is an audio and/or video connection; and/or the network (104) is a wide area network or a local area network consisting of a mobile network or wired network.
